# EUROPEAN PATENT APPLICATION

(11) **EP 4 089 809 A1**
(43) Date of publication of application: **16.11.2022**
(21) Application number: 21911494.9
(22) Date of filing: 21.12.2021
(51) Int. Cl.: H01M 50/178, H01M 50/557, H01M 50/183, H01M 50/124, B29C 65/18, B29C 65/00, B29L 31/00

(54) **BATTERY CELL AND MANUFACTURING APPARATUS THEREFOR**

(30) Priority: 24.12.2020 KR 20200183727; 20.12.2021 KR 20210182325
(71) Applicant: LG Energy Solution, Ltd., Seoul 07335 (KR)
(72) Inventor: MIN, Minkyu, Daejeon 34122 (KR); KIM, Daehong, Daejeon 34122 (KR); KIM, Gi Man, Daejeon 34122 (KR)
(74) Representative: Plasseraud IP
(86) International application number: PCT/KR2021/019542
(87) International publication number: WO 2022/139427

(57) **Abstract**

A device for manufacturing a battery cell according to one embodiment of the present disclosure includes a sealing tool that forms a sealing part on the outer peripheral surface of a battery case to which an electrode assembly is mounted, wherein the sealing tool comprises a sealing surface that is brought into contact with the outer peripheral surface of the battery case, and wherein the sealing surface comprises a central surface and an inclined surface formed on at least one side of the central surface.

## Description

### [TECHNICAL FIELD]

### Cross Citation with Related Application(s)

This application claims the benefit of and priority of Korean Patent Application No. 10-2020-0183727 filed on December 24, 2020 and Korean Patent Application No. 10-2021-0182325 filed on December 20, 2021 in the Korean Intellectual Property Office, the contents of which are incorporated herein by reference in their entirety.

The present disclosure relates to a battery cell and a device for manufacturing the same, and a battery cell having improved sealing strength, and a manufacturing device for the same.

### [BACKGROUND]

Along with the increase of technology development and demands for mobile devices, the demand for batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of a battery case, a secondary battery is classified into a cylindrical battery where an electrode assembly is mounted in a cylindrical metal can, a prismatic battery where an electrode assembly is mounted in a prismatic metal can, and a pouch-type battery where an electrode assembly is mounted into a pouch type case formed of an aluminum laminate sheet. Here, the electrode assembly mounted in the battery case is an electricity-generating device enabling charge and discharge that has a structure of a cathode, an anode, and a separator interposed between the cathode and the anode, and is divided into a jelly-roll type in which an electrode assembly including a separator interposed between the cathode and the anode, each made of an active material-coated long sheet, is rolled, and a stack-type in which a plurality of cathodes and a plurality of anodes are stacked in this order such that a separator is interposed between the cathode and the anode.

Among them, in particular, a pouch-type battery having a structure in which a stack-type or stack/folding-type electrode assembly is mounted in a pouch-type battery case of an aluminum laminate sheet is gradually increasing in its usage amount due to low manufacturing cost, small weight, easy deformation, and the like.

However, recently, as the energy density of the battery cell has increased, the amount of gas generated inside the battery cell has also increased. Further, a venting phenomenon may occur according to an increase in internal pressure due to generation of internal gas. In addition, moisture can penetrate into the battery cell damaged by the venting phenomenon, which causes a problem that side reactions may occur, the battery performance is deteriorated and the additional gas is generated. Thereby, there is a growing need to develop a battery cell manufacturing device that prevents a venting phenomenon and manufactures a battery cell having improved sealing strength.

### [DETAILED DESCRIPTION OF THE INVENTION]

### [Technical Problem]

It is an object of the present disclosure to provide a battery cell having improved sealing strength, and a manufacturing device for the same.

The objects of the present disclosure are not limited to the aforementioned objects, and other objects which are not described herein should be clearly understood by those skilled in the art from the following detailed description and the accompanying drawings.

### [Technical Solution]

According to one aspect of the present disclosure, there is provided a device for manufacturing a battery cell, comprising: a sealing tool that forms a sealing part on the outer peripheral surface of a battery case to which an electrode assembly is mounted, wherein the sealing tool comprises a sealing surface that is brought into contact with the outer peripheral surface of the battery case, and wherein the sealing surface comprises a central surface and an inclined surface formed on at least one side of the central surface.

The inclined surface may extend along a width direction of the sealing part with respect to the central surface.

The sealing part may be located on an outer peripheral surface through which an electrode lead protruding toward the outward of the battery case from the electrode assembly passes, and the lead film may be located on upper and lower parts of the electrode lead, respectively.

The sealing part includes a first sealing part and a second sealing part, and the central surface may face the first sealing part, and the inclined surface may face the second sealing part.

The central surface and the first sealing part, and the inclined surface and the second sealing part may be sequentially brought into contact with each other.

While the central surface is brought into contact with the first sealing part, the second sealing part is bent along the inclination angle of the inclined surface.

The sealing surface may form a heat-sealing part between the sealing part and the lead film.

The heat-sealing part includes a first heat-sealing part and a second heat-sealing part, the central surface may form a first heat-sealing part between the first sealing part and the lead film, and the inclined surface may form a second heat-sealing part between the second sealing part and the lead film.

The battery case may be made of a film including an inner layer and an outer layer.

The first material contained in the inner layer of the first sealing part may be eluted in a direction away from the central surface.

The inclined surface may heat-seal the first material together with the inner layer of the second sealing part.

The first material may be contained in the second heat-sealing part.

The first material may be eluted to a first length on the basis of a boundary line between the central surface and the inclined surface.

The width of the inclined surface may be greater than or equal to the first length.

The sealing tool may include a first sealing tool located at the upper part and a second sealing tool located at the lower part with respect to the sealing part.

According to another aspect of the present disclosure, there is provided a battery cell comprising: an electrode assembly, and a battery case to which the electrode assembly is mounted and which has a sealing part on an outer peripheral surface, wherein the sealing part comprises a first sealing part and a second sealing part, wherein the second sealing part is bent so as to have an inclination angle with respect to the first sealing part, and the second sealing part comprises a heat-sealing part.

The sealing part may be located on an outer peripheral surface through which an electrode lead protruding toward the outward of the battery case from the electrode assembly passes, and the lead film may be located on upper and lower parts of the electrode lead, respectively.

The second sealing part includes an inclined part and a flat part, and the heat-sealing part may be formed between the flat part and the lead film.

The first material contained in the inner layer of the first sealing part may be eluted in a direction away from the central surface, and the flat part may be heat-sealed together with the first material to form the heat-sealing part.

The first material may be contained in the heat-sealing part.

### [Advantageous Effects]

According to the embodiments of the present disclosure, the sealing tool contained in the battery cell manufacturing device of the present disclosure includes a sealing surface, wherein the sealing surface includes a central surface and an inclined surface formed on at least one side of the central surface, so that a battery cell having improved sealing strength can be manufactured. The battery cell manufactured thereby includes an additional sealing part, and thus can improve the durability of the battery cell by high adhesive strength.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view of a conventional battery cell;
Fig. 2 is a cross-sectional view showing that the sealed part of the battery cell of Fig. 1 is formed by a conventional battery cell manufacturing device;
Fig. 3 is a cross-sectional view showing a sealing part of the battery cell formed by the battery cell manufacturing device of Fig. 2;
Fig. 4 is an enlarged view showing a part of Fig. 3;
Fig. 5 is a perspective view showing a battery cell manufacturing device according to the present embodiment;
Fig. 6 is a cross-sectional view showing the upper part of the battery cell manufacturing device of Fig. 5;
Fig. 7 is a cross-sectional view showing that the sealing part of the battery cell is formed by the battery cell manufacturing device of Fig. 5;
Fig. 8 is a cross-sectional view showing a sealing part of the battery cell formed by the battery cell manufacturing device of Fig. 5;
Fig. 9 is an enlarged view showing a part of Fig. 8; and
Fig. 10 is an enlarged view showing the second sealing part of Fig. 9.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross portion cut vertically.

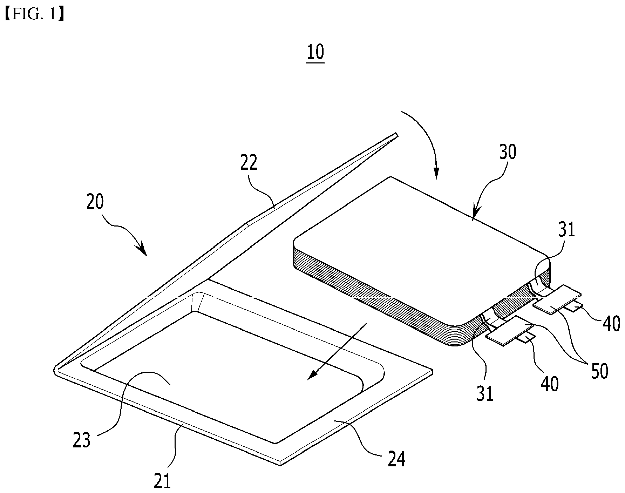

Referring to Fig. 1, the battery cell 10 is a pouch battery cell, and contains an electrode assembly 30 and an electrolyte solution within a battery case 20. Further, the battery cell has a structure in which the electrode leads 40 electrically connected to the electrode tabs 31 of the electrode assembly 30 are exposed to the outside, and a lead film 50 is attached to the upper and lower parts of the electrode leads 40. Further, in the battery case 20, in a state in which the electrode assembly 30 is mounted in a recessed receiving part 23, the upper end 24 of the case body 21 and the outer peripheral part of the cover 22 are sealed to each other to constitute a sealing part, whereby the inner space is sealed.

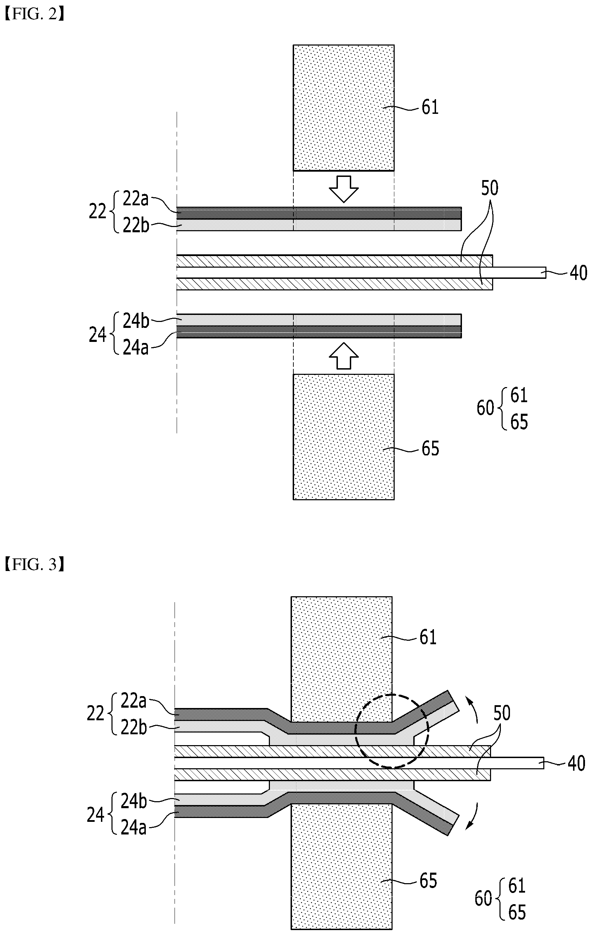

Referring to Figs. 1 and 2, the conventional battery cell manufacturing device 60 includes an upper sealing tool 61 and a lower sealing tool 65, and one end of the battery case 20 may be located between the upper sealing tool 61 and the lower sealing tool 65. More specifically, the upper end part 24 of the case body 21 and the cover 22 may be fused to each other in a state of being located between the upper sealing tool 61 and the lower sealing tool 65.

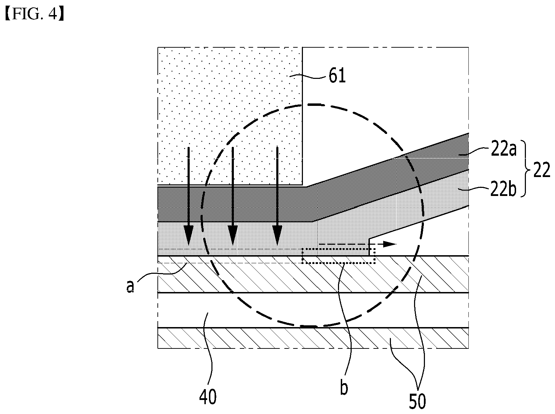

Referring to Figs. 3 and 4, as the upper sealing tool 61 and the lower sealing tool 65 are brought into contact with the cover 22 and the upper end 24 of the case body 21, respectively, a fusion region (a) is formed in which the inner layer 22b of the cover 22 and the inner layer 24b of the upper end 24 are respectively fused to the lead film 50. However, due to the heat and pressure applied to the cover 22 and the upper end part 24 of the case body 21 by the upper sealing tool 61 and the lower sealing tool 65, an elution region (b) is also formed in which the material contained in the inner layer 22b of the cover 22 and the inner layer 24b of the upper end part 24 is eluted to the outside of the fusion region (a).

At this time, since heat and pressure are not applied to the elution region (b) by the sealing tools 61 and 65, the material included in the elution region (b) exhibits a low adhesive force to the lead film 50, and thus there is a problem that the sealing strength is lowered. In this case, when an increase in internal pressure occurs inside the battery case 20, there is a problem that a venting phenomenon occurs in the elution region (b) having a low sealing strength. Thereby, according to the present embodiment, it is intended to manufacture a battery cell that prevents the venting phenomenon and has improved sealing strength.

Next, a device for manufacturing a battery cell according to an embodiment of the present disclosure will be described. However, here, a description will be made based on a part of the outer peripheral part of the battery cell, but is not necessarily limited thereto, and the outer peripheral part of the battery cell will be described with the same or similar contents.

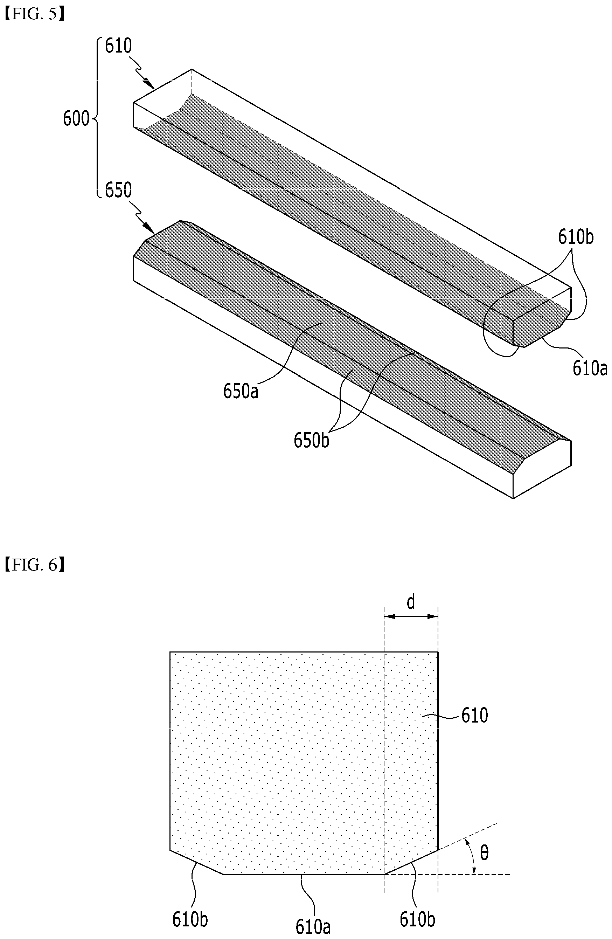

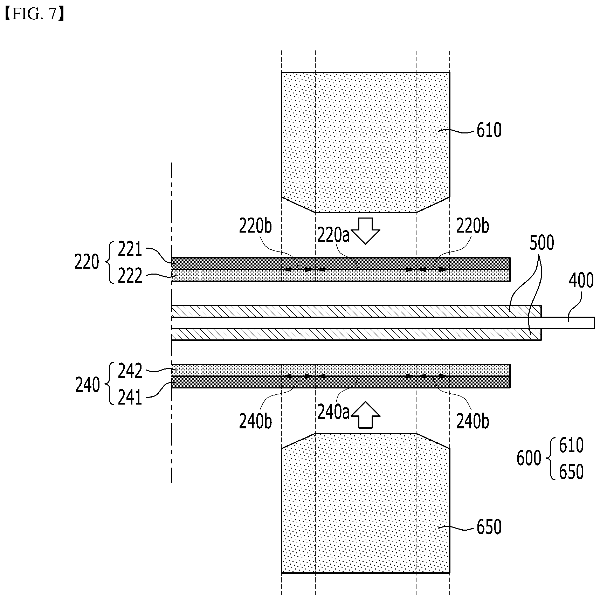

Fig. 5 is a perspective view showing a battery cell manufacturing device according to the present embodiment. Fig. 6 is a cross-sectional view showing the upper part of the battery cell manufacturing device of Fig. 5. Fig. 7 is a cross-sectional view showing that the sealing part of the battery cell is formed by the battery cell manufacturing device of Fig. 5.

Referring to Figs. 5 and 6, the device for manufacturing a battery cell according to an embodiment of the present disclosure includes a sealing tool 600, and the sealing tool 600 includes a first sealing tool 610 and a second sealing tool 650. More specifically, the sealing tool 600 forms a sealing part on the outer peripheral surface of the battery case described later, and the sealing tool 600 includes a first sealing tool 600 located at the upper part and a second sealing tool 650 located at the lower part with respect to the sealing part.

Further, the first sealing tool 610 and the second sealing tool 650 may have the same size, length, width, and shape as each other. However, the present disclosure is not limited thereto, and may have different sizes, lengths, widths, and shapes depending on the shape of the battery case.

Further, the first sealing tool 610 and the second sealing tool 650 may be brough into contact with the outer peripheral surface of the battery case described later at a temperature of 25 to 500 degrees Celsius and/or a pressure of 1.0 MPa or less, respectively, but is not limited thereto.

Referring to Fig. 7, the battery cell according to the present embodiment includes an electrode assembly and battery cases 220 and 240 on which the electrode assembly is mounted and which has a sealing part on an outer peripheral surface. The battery cases 220 and 240 include an upper case 220 and a lower case 240 to which the electrode assembly is mounted, and the outer peripheral surface of the upper case 220 and the outer peripheral surface of the lower case 240 can be located between the first sealing tool 610 and the second sealing tool 650. Here, the first sealing tool 610 and the second sealing tool 650 press and heat the outer peripheral surface of the upper case 220 and the outer peripheral surface of the lower case 240, so that the sealing part can be formed on the outer peripheral surfaces of the battery cases 220 and 240.

In one example, among the surfaces in which the outer peripheral surface of the upper case 220 and the outer peripheral surface of the lower case 240 are brought into contact with each other, the first sealing tool 610 and the second sealing tool 650 can press and heat the outer peripheral surface through which the electrode lead 400 protruding outward of the battery cases 220 and 240 from the electrode assembly passes, and a lead film 500 can be located at the upper and lower parts of the electrode lead 400, respectively.

Thereby, the device for manufacturing a battery cell according to an embodiment of the present disclosure allows the sealing part to form on the outer peripheral surface where the electrode lead 400 and the lead film 500 are located, and the adhesive strength between the lead film 500 and the battery cases 220 and 240 located on the outer peripheral surface vulnerable to the venting phenomenon can be improved, and the long-term durability of the battery cell resulting therefrom can also be further improved.

Further, referring to Figs. 5 to 7, the sealing tool 600 includes a sealing surface that is brought into contact with the outer peripheral surfaces of the battery cases 220 and 240, respectively, and the sealing surface includes central surfaces 610a and 650a and inclined surfaces 610b and 650b formed on at least one side of the central surfaces 610a and 650a. More specifically, the first sealing tool 610 includes a first central surface 610a and a first inclined surface 610b that are brought into contact with the outer peripheral surface of the upper case 220, and the second sealing tool 650 includes a second central surface 650a and a second inclined surface 650b that are brought into contact with the outer peripheral surface of the lower case 240.

Further, in the sealing tool 600, the inclined surfaces 610b and 650b may extend along the width direction of the sealing part with respect to the central surfaces 610a and 650a. More specifically, the inclined surfaces 610b and 650b may extend along the inner and/or outer directions of the sealing part with respect to the central surfaces 610a and 650a.

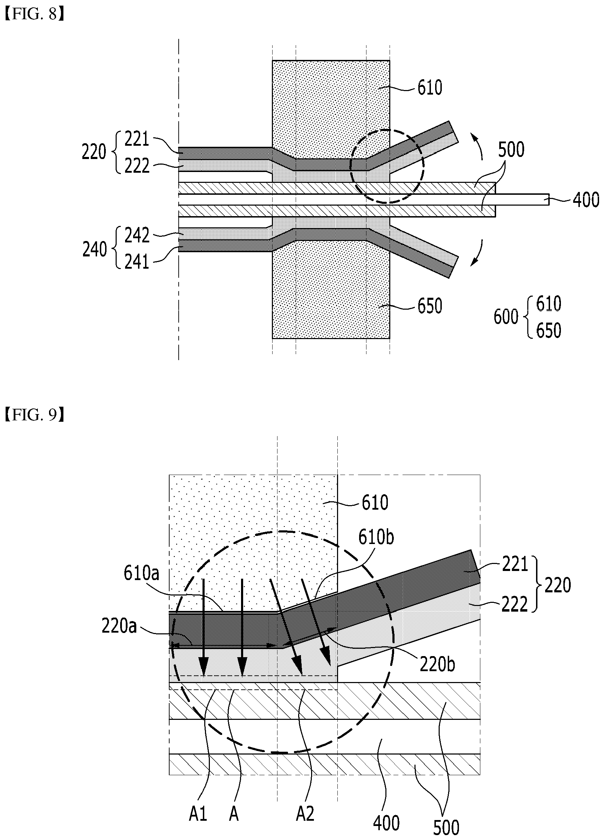

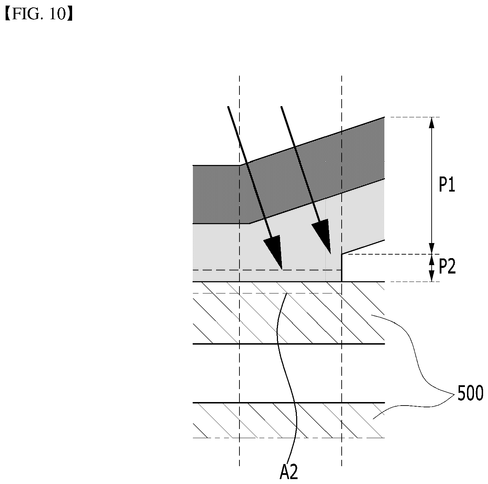

Fig. 8 is a cross-sectional view showing a sealing part of the battery cell formed by the battery cell manufacturing device of Fig. 5. Fig. 9 is an enlarged view showing a part of Fig. 8. Fig. 10 is an enlarged view showing the second sealing part of Fig. 5.

Referring to Figs. 6 to 8, the sealing part includes first sealing parts 220a and 240a and second sealing parts 220b and 240b, the central surfaces 610a and 650a of the sealing tool 600 may face the first sealing parts 220a and 240a, and the inclined surfaces 610b and 650b may face the second sealing parts 220b and 240b. The second sealing parts 220b and 240b of the battery cell according to the present embodiment are bent so as to have an inclination angle with respect to the first sealing parts 220a and 240a, and the second sealing parts 220b and 240b include a heat-sealing part A as described with reference to Fig. 9.

More specifically, in the present embodiment, as the sealing tool 600 presses on the outer peripheral surface of the upper case 220 and the outer peripheral surface of the lower case 240, the central surfaces 610a and 650a and the first sealing parts 220a and 240a, and the inclined surfaces 610b and 650b and the second sealing parts 220b and 240b can be sequentially opposed to each other. As one example, while the center surfaces 610a and 650a and the first sealing parts 220a and 240a are brough into contact with each other, the second sealing parts 220b and 240b are bent on the basis of the first sealing parts 220a and 240a, so that the inclined surfaces 610b and 650b and the second sealing parts 220b and 240b can be brought into contact with each other.

Thereby, in the device for manufacturing a battery cell according to an embodiment of the present disclosure, the center surfaces 610a and 650a of the sealing tool 600 presses and heats the first sealing parts 220a and 240a, and the inclined surfaces 610b and 650b of the sealing tool 600 may press and heat the second sealing parts 220b and 240b. That is, while the center surfaces 610a and 650a and the first sealing parts 220a and 240a are brought into contact with each other, heat and pressure can be applied even to the second sealing parts 220b and 240b that are bent with respect to the first sealing parts 220a and 240a, and the adhesive force and sealing strength of the second sealing parts 220b and 240b to the lead film 500 can be further improved as compared with the conventional case. In addition, a venting phenomenon between the second sealing parts 220b and 240b and the lead film 500 can be prevented, and the long-term durability of the battery cell can also be improved.

Further, referring to Figs. 3 and 4 , in the conventional battery cell manufacturing device 60, the upper sealing tool 61 and the lower sealing tool 65 are brought into contact with the cover 22 and the upper end 24 of the case body 21, the peripheral part of the sealing surface of the cover 22 in contact with the upper sealing tool 61 is lifted at a first angle. This also applies between the lower sealing tool 65 and the case body 21. That is, the first angle may be an angle formed by naturally bending the upper sealing tool 61 and the lower sealing tool 65 while sealing the cover 22 and the upper end 41 of the case body 21.

On the other hand, referring to Figs. 6 to 8, while the center surfaces 610a and 650a of the sealing tool 600 and the first sealing parts 220a and 240a are brought into contact with each other, the second sealing parts 220b and 240b are bent along the inclined surfaces 610b and 650b. That is, the second sealing parts 220b and 240b are bent at an angle that is equal to the inclination angle of the inclined surfaces 610b and 650b. Here, the inclination angle θ of the inclined surfaces 610b and 650b may be a second angle, but may be smaller than or equal to the first angle.

The second angle may be 5 degrees or more and 50 degrees or less. More specifically, the second angle may be 7 degrees or more and 45 degrees or less. As one example, the second angle may be 10 degrees or more and 40 degrees or less.

Thereby, the inclination angle (θ) of the inclined surfaces 610b and 650b is inclined at an angle within the above-mentioned range, and is brought into contact with the second sealing parts 220b and 240b that are bent with respect to the first sealing parts 220a and 240a. As heat and pressure are applied to the second sealing parts 220b and 240b, the adhesive force and sealing strength of the second sealing parts 220b and 240b to the lead film 500 can be improved.

On the other hand, when the inclination angle (θ) of the inclined surfaces 610b and 650b is less than 5 degrees, it is too small compared to the angle of the second sealing parts 220b and 240b bent with respect to the first sealing parts 220a and 240a, so that the first material included in the inner layer 222 of the first sealing part 220a described later is excessively eluted. Therefore, there is a problem that causes such defects, such as exceeding the design dimension limit for the first sealing parts 220a and 240a and the second sealing parts 220b and 240b, contaminating the sealing surface of the sealing tool 600, and contaminating the welding portions of the electrode leads and the electrode tabs in the battery cases 220 and 240.

In addition, when the inclination angle θ of the inclined surfaces 610b and 650b is greater than 50 degrees, it may be excessively large compared to the first angle of the conventional battery cell manufacturing device 60. Thus, as the center surfaces 610a and 650a of the sealing tool 600 are brought into contact with the first sealing parts 220a and 240a, the second sealing parts 220b and 240b may not be sufficiently brought into contact with the inclined surfaces 610b and 650b with each other even if the second sealing parts 220b and 240b are bent. That is, the pressing and heating from the inclined surfaces 610b and 650b to the second sealing parts 220b and 240b are not sufficiently performed, which causes a problem that adhesive strength and sealing strength are lowered.

Further, referring to Figs. 8 to 10, in the battery cell manufacturing device according to the present embodiment, the sealing surface may form a heat-sealing part A between the sealing part and the lead film 500. More specifically, the heat-sealing part A includes a first heat-sealing part A1 and a second heat sealing part A2, the central surface 610a of the first sealing tool 610 may form a first heat-sealing part A1 between the first sealing part 220a and the lead film 500, and the inclined surface 610b of the sealing tool 600 may form a second heat-sealing part A2 between the second sealing part 220b and the lead film 500. This can be similarly described for the second sealing tool 650.

Specifically, as shown in Fig. 10, the second sealing part 220b of the battery cell according to the present embodiment may include an inclined part P1 and a flat part P2. A second heat-sealing part A2 may be formed between the flat part P2 and the lead film 500. At this time, the first material contained in the inner layer of the first sealing part 220a is eluted in a direction away from the second sealing part 220a, and the flat part P2 may be heat-sealed together with the first material to form the second heat-sealing part A2. As one example, the first material is a material constituting the inner layer 222 and may be polypropylene, but is not limited thereto, and any material having electrical insulation can be applied. The first material may be included in the second heat-sealing part A2.

Thereby, compared to the conventional case, the battery cell formed by the battery cell manufacturing device according to the present embodiment allows the heat-sealing parts A to form between the lead film 500 and the first sealing parts 220a and 240a and the second sealing parts 220b and 240b, so that the adhesive force and sealing strength of the first sealing parts 220a and 240a and the second sealing parts 220b and 240b to the lead film 500 can be improved. In addition, a venting phenomenon between the first sealing parts 220a and 240a and the second sealing parts 220b and 240b and the lead film is prevented, and the long-term durability of the battery cell can also be improved.

Further, referring to Figs. 7 to 9, in the battery cell according to the present embodiment, the battery cases 220 and 240 in contact with the sealing surface of the sealing tool 600 may be made of a film containing inner layers 222 and 242 and outer layers 221 and 241. As one example, the battery cases 220 and 240 may be formed of a laminate sheet in which a separate metal layer (not shown) is interposed between the inner layers 222 and 242 and the outer layers 221 and 241. Here, the inner layers 222 and 242 and the outer layers 221 and 241 may each be formed of a resin layer.

Referring to Fig. 9, as the center surface 610a of the first sealing tool 610 presses and heats the first sealing part 220a, the first material contained in the inner layer 222 of the first sealing part 220a may be eluted in a direction away from the central surface 610a. Here, as the inclined surface 610b of the second sealing tool 650 presses and heats the second sealing part 220b, the inclined surface 610b of the second sealing tool 650 may heat-seal the first material together with the inner layer 222 of the second sealing part 220b. That is, the second heat-sealing part A2 contained in the heat-sealing part A may include the first material. This may be similarly described for the second sealing tool 650.

More specifically, the first material eluted from the inner layer 222 of the first sealing part 220a may be eluted to a first length based on the boundary line between the central surface 610a and the inclined surface 610b. As one example, the first material is a material constituting the inner layer 222 and may be polypropylene, but is not limited thereto and any material having electrical insulation can be applied. Here, referring to Figs. 6 and 9, the width of the inclined surface 610b may be greater than or equal to the first length. This can be similarly described for the second sealing tool 650 .

The inclined surfaces 610b and 650b may have a width of 0.5 mm to 3.0 mm. More specifically, the inclined surfaces 610b and 650b may have a width of 0.6 mm to 2.7 mm. As one example, the inclined surfaces 610b and 650b may have a width of 0.7 mm to 2.5 mm.

Thereby, the width of the inclined surfaces 610b and 650b is formed to have a width within the above-mentioned range, and as heat and pressure are also applied to the first material eluted from the inner layer 222 of the first sealing part 220a by the central surfaces 610a and 650a, the adhesive force and sealing strength of the second sealing parts 220b and 240b to the lead film 500 can be improved.

On the other hand, when the width of the inclined surfaces 610b and 650b is less than 0.5 mm, the pressing and heating of the first material eluted from the inner layer 222 of the first sealing part 220a is not sufficiently performed, which causes a problem that the adhesive force and sealing strength are lowered. In addition, if the width of the inclined surfaces 610b and 650b exceeds 3.0mm, the width is too large compared to the first material eluted from the inner layer 222 of the first sealing part 220a, which causes a problem that the volume and weight of the sealing tool 600 are unnecessarily increased, which may be disadvantageous in terms of manufacturing cost and manufacturing process.

The battery cell according to another embodiment of the present disclosure can be a battery cell manufactured by the above-mentioned battery cell manufacturing device. Further, the battery module according to another embodiment of the present disclosure includes a battery cell manufactured by the above-mentioned battery cell manufacturing device. Meanwhile, one or more battery modules according to the present embodiment may be packaged in a pack case to form a battery pack.

The above-mentioned battery module and the battery pack including the same can be applied to various devices. Such a device may be applied to a vehicle means such as an electric bicycle, an electric vehicle, or a hybrid vehicle, but the present disclosure is not limited thereto, and is applicable to various devices that can use a battery module, which also falls under the scope of the present disclosure.

Although the invention has been shown and described with reference to the preferred embodiments, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

220: upper case
240: lower case
400: electrode lead
500: lead film
600: sealing tool

## Claims

1. A device for manufacturing a battery cell, comprising:
a sealing tool that forms a sealing part on the outer peripheral surface of a battery case to which an electrode assembly is mounted,
wherein the sealing tool comprises a sealing surface that is brought into contact with the outer peripheral surface of the battery case, and
wherein the sealing surface comprises a central surface and an inclined surface formed on at least one side of the central surface.

2. The device for manufacturing a battery cell according to claim 1, wherein:
the inclined surface extends along a width direction of the sealing part with respect to the central surface.

3. The device for manufacturing a battery cell according to claim 1, wherein:
the sealing part is located on an outer peripheral surface through which an electrode lead protruding toward the outward of the battery case from the electrode assembly passes, and
the lead film is located on upper and lower parts of the electrode lead, respectively.

4. The device for manufacturing a battery cell according to claim 3, wherein:
the sealing part comprises a first sealing part and a second sealing part, and
the central surface faces the first sealing part, and the inclined surface faces the second sealing part.

5. The device for manufacturing a battery cell according to claim 4, wherein:
the central surface and the first sealing part, and the inclined surface and the second sealing part are sequentially brought into contact with each other.

6. The device for manufacturing a battery cell according to claim 5, wherein:
while the central surface is brought into contact with the first sealing part, the second sealing part is bent along the inclination angle of the inclined surface.

7. The device for manufacturing a battery cell according to claim 4, wherein:
the sealing surface forms a heat-sealing part between the sealing part and the lead film.

8. The device for manufacturing a battery cell according to claim 7, wherein:
the heat-sealing part includes a first heat-sealing part and a second heat-sealing part,
the central surface forms a first heat-sealing part between the first sealing part and the lead film, and
the inclined surface forms a second heat-sealing part between the second sealing part and the lead film.

9. The device for manufacturing a battery cell according to claim 8, wherein:
the battery case is made of a film including an inner layer and an outer layer.

10. The device for manufacturing a battery cell according to claim 9, wherein:
a first material contained in the inner layer of the first sealing part is eluted in a direction away from the central surface.

11. The device for manufacturing a battery cell according to claim 10, wherein:
the inclined surface heat-seals the first material together with the inner layer of the second sealing part.

12. The device for manufacturing a battery cell according to claim 11, wherein:
the first material is contained in the second heat-sealing part.

13. The device for manufacturing a battery cell according to claim 11, wherein:
the first material is eluted to a first length on the basis of a boundary line between the central surface and the inclined surface.

14. The device for manufacturing a battery cell according to claim 13, wherein:
the width of the inclined surface is greater than or equal to the first length.

15. The device for manufacturing a battery cell according to claim 1, wherein:
the sealing tool includes a first sealing tool located at the upper part and a second sealing tool located at the lower part with respect to the sealing part.

16. A battery cell comprising:
an electrode assembly, and
a battery case to which the electrode assembly is mounted and which has a sealing part on an outer peripheral surface,
wherein the sealing part comprises a first sealing part and a second sealing part,
wherein the second sealing part is bent so as to have an inclination angle with respect to the first sealing part, and
the second sealing part comprises a heat-sealing part.

17. The battery cell according to claim 16, wherein:
the sealing part is located on an outer peripheral surface through which an electrode lead protruding toward the outward of the battery case from the electrode assembly passes, and
the lead film is located on upper and lower parts of the electrode lead, respectively.

18. The battery cell according to claim 16, wherein:
the second sealing part comprises an inclined part and a flat part, and
the heat-sealing part is formed between the flat part and the lead film.

19. The battery cell according to claim 18, wherein:
a first material contained in the inner layer of the first sealing part is eluted in a direction away from the central surface, and the flat part is heat-sealed together with the first material to form the heat-sealing part.

20. The battery cell according to claim 18, wherein:
the first material is contained in the heat-sealing part.
